# FASCICULE DE BREVET EUROPEEN

(11) **EP 0 480 855 B1**
(45) Date de publication et mention de la délivrance du brevet: **25.01.1995**
(21) Numéro de dépôt: 91420360.9
(22) Date de dépôt: 11.10.1991
(51) Int. Cl.: B60C 23/00

(54) **Dispositif de transfert de fluide sous pression relative dans une installation de régulation de la pression de gonflage d'un pneumatique de véhicule roulant**
Übertragungseinrichtung für ein Fluid unter relativem Druck mit Hilfe einer Druckregeleinrichtung eines während der Fahrt aufblasbaren Reifens
Transfer device for a fluid under relative pressure in an installation for regulation of the inflation pressure of a vehicle tyre

(30) Priorité: 12.10.1990 FR 9012858
(43) Date de publication de la demande: 15.04.1992
(73) Titulaire: Fazekas, Stéphane, F-42640 Saint Germain Lespinasse (FR); Boulicault, Jean-Michel, F-42640 Saint Germain Lespinasse (FR); Chazal, René, 42300 Mably (FR); Dumas, Hubert, F-42000 Saint Etienne (FR); Gaune, Jacquis, F-42640 Saint Germain Lespinasse (FR); Guillot, Pierre, F-42290 Sorbiers (FR)
(72) Inventeur: Fazekas, Stéphane, F-42460 St Germain Lespinasse (FR)
(74) Mandataire: Ropital-Bonvarlet, Claude

(56) Documents cités:
- EP-A- 0 308 256
- DE-A- 3 619 603
- FR-A- 724 480
- FR-A- 2 509 230
- US-A- 2 908 241

## Description

La présente invention est relative au contrôle de la pression de gonflage des pneumatiques d'un véhicule roulant, plus particulièrement mais non exclusivement, terrestre.

L'invention vise, plus spécifiquement, les véhicules du type à essieux en portique conçus pour disposer d'une garde au sol plus grande que celle des véhicules ordinaires.

Dans les véhicules du type ci-dessus, les pneumatiques sont montés sur des roues adaptées sur des moyeux qui sont entraînés en rotation à partir de pignons dentés montés sur une partie fixe de l'essieu par l'intermédiaire de moyens de roulement. Ces pignons sont attaqués par la transmission directement ou indirectement. En règle générale, chaque roue possède un pignon denté, dit intermédiaire, logé dans un boîtier de carter et attaqué par un pignon menant entraîné en rotation par la transmission.

Dans les constructions du type ci-dessus, le problème du contrôle de la pression de gonflage du pneumatique, à partir d'un circuit de distribution de fluide sous pression relative porté par la partie fixe du véhicule, implique de pouvoir conduire un tel fluide sous pression relative, du circuit issu de la partie fixe de l'essieu portique au moyeu de roue et, plus particulièrement, au centre de ce dernier, pour assurer le raccordement avec la valve de gonflage du pneumatique.

Etant donné que cette liaison fluidique doit être établie entre une partie fixe et une partie tournante, au surplus devant répondre à une exigence de démontabilité rapide et pratique, des problèmes de liaison mécanique et d'étanchéité sont à considérer et à résoudre.

La technique antérieure connaît, notamment par la demande **FR 2 509 230 (82-12 098)**, une proposition consistant à ménager, à travers le moyeu et le pignon denté d'entrainement, un passage axial en regard duquel la partie fixe de l'essieu présente un embout de raccordement tubulaire vissé communiquant avec le circuit de distribution d'un fluide sous pression relative.

La construction préconisée consiste à adapter, sur le moyeu et par vissage, un tube qui est monté, par sa partie terminale intérieure et par l'intermédiaire d'un joint tournant, sur l'embout de raccordement de la partie fixe.

Une telle proposition doit être considérée comme apportant une solution au problème posé, bien qu'un certain nombre d'inconvénients lui soient encore attachés.

Dans une telle structure, en effet, le joint tournant est disposé au niveau de la partie fixe de l'essieu, c'est-à-dire à relativement grande distance de la face extérieure du moyeu de roue. Bien que le tube ait un caractère de démontabilité, l'accessibilité au joint tournant est, pour le moins, peu pratique et pose des problèmes d'inspection et de surveillance.

En outre, le tube est monté par vissage dans le moyeu et possède une longueur relativement grande, de manière que sa partie terminale intérieure soit à même d'être emboîtée par une portée sur le joint tournant qui est supporté par l'embout de raccordement vissé.

Malgré toutes les précautions et tolérances d'usinage pouvant être prescrites, voire respectées, il est clair que l'accumulation des jeux et des défauts de concentricité, ainsi que la présence de liaisons par vissage, conduisent, inéluctablement, à un montage ayant pour conséquence une excentricité relative du tube par rapport au joint tournant. Une telle excentricité est, en règle générale, aussi accentuée par le caractère non absolument rectiligne du tube de transfert, soit par construction, soit par déformation au cours des manipulations.

Les défauts d'excentration sont responsables de fuites et d'une usure prématurée du joint tournant qui n'est plus rapidement à même d'assumer la fonction pour laquelle il est prévu, en particulier dans les cas d'installations de contrôle où la pression devant être régulée est relativement élevée.

L'objet de l'invention est de remédier aux différents inconvénients ci-dessus dans le domaine d'application visé, en proposant un nouveau dispositif de transfert de fluide sous pression relative, dans une installation de régulation de la pression de gonflage d'un pneumatique de véhicule roulant.

Le dispositif de transfert selon l'invention est de conception simple et pratique de mise en place et vise à rendre possible le montage du joint tournant dans des conditions d'accessibilité réelle, tout en le garantissant des défauts d'excentration possibles entre lui-même et le tube de transfert avec lequel il doit coopérer.

Pour atteindre les objectifs ci-dessus, le dispositif de transfert de fluide sous pression relative est caractérisé en ce que la canalisation de transfert comprend un tube solidaire, par sa partie terminale dite intérieure, d'un raccord monté, de façon amovible et étanche, sur la partie fixe pour communiquer avec la source de fluide et engagé, par sa partie terminale dite extérieure, à travers un joint tournant porté par le moyeu et au delà duquel le tube débouche pour communiquer avec un circuit menant au pneumatique.

Diverses autres caractéristiques ressortent de la description faite ci-dessous en référence aux dessins annexés qui montrent, à titre d'exemple non limitatif, une forme de réalisation de l'objet de l'invention.

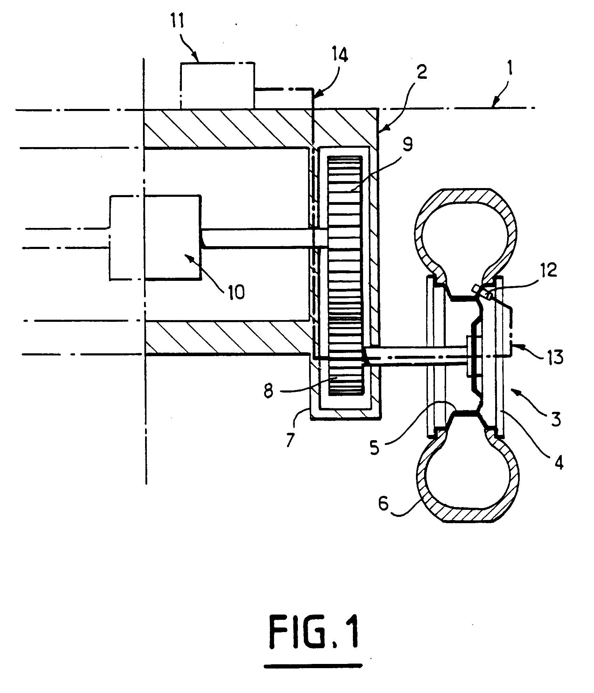

La **fig. 1** est une demi-vue schématique transversale illustrant le domaine d'application de l'objet de l'invention.

La **fig. 2** est une coupe-élévation, correspondant à la **fig. 1**, mais montrant, à plus grande échelle, le dispositif de l'invention.

La **fig. 3** est une coupe-élévation représentant, à plus grande échelle encore, un détail constructif du dispositif de l'invention.

Le dispositif de l'invention s'applique à un véhicule **1** roulant, de préférence mais non exclusivement terrestre, et, plus particulièrement encore, à un véhicule de fort tonnage destiné à progresser en tout terrain possible.

Des véhicules du genre ci-dessus comprennent, généralement, plusieurs essieux **2** sur lesquels sont adaptées des roues **3** composée chacune d'un moyeu **4** formant ou comportant une jante **5** destinée au montage d'un pneumatique **6**.

Pour réserver une garde au sol la plus importante possible, le moyeu **4** est porté par un essieu **2**, du type surélevé, adoptant une construction en portique délimitant, pour chaque roue, un caisson ou carter **7** contenant un pignon **8** intermédiaire d'entrainement du moyeu **4**. Le pignon **8** engrène en permanence avec un pignon menant **9** entraîné en rotation par une transmission **10**.

Le problème que l'invention se propose de résoudre est celui de pouvoir assurer le transfert d'un fluide gazeux sous pression relative, entre une source ou réserve **11**, portée par l'essieu, le châssis ou toute autre partie fixe du véhicule **1**, et une valve **12** de gonflage, voire dégonflage, du pneumatique **6** par l'intermédiaire d'un circuit **13** devant, nécessairement, être établi entre une partie fixe du véhicule et le moyeu tournant.

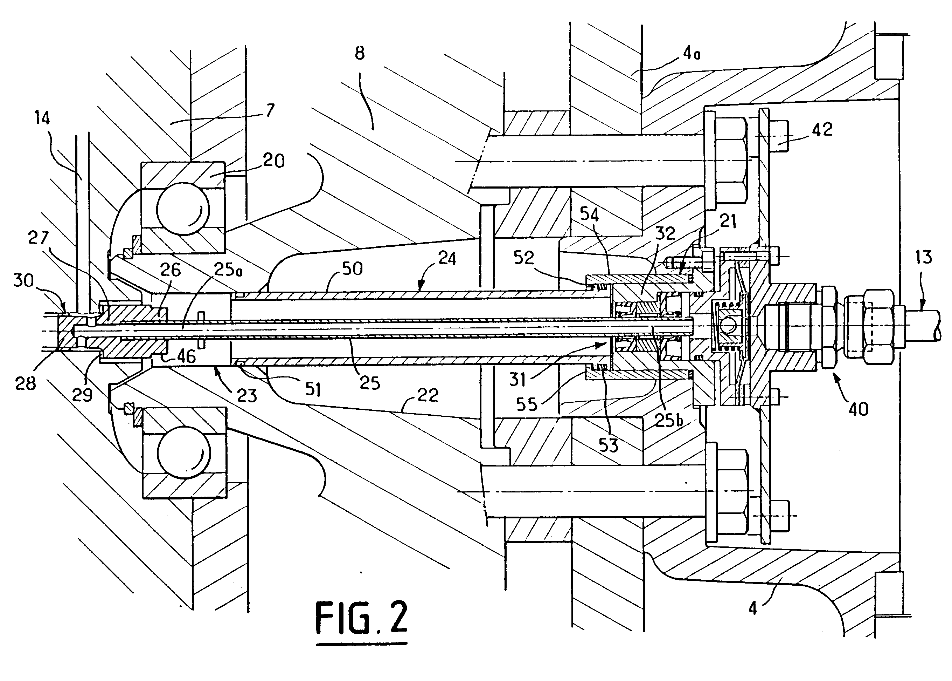

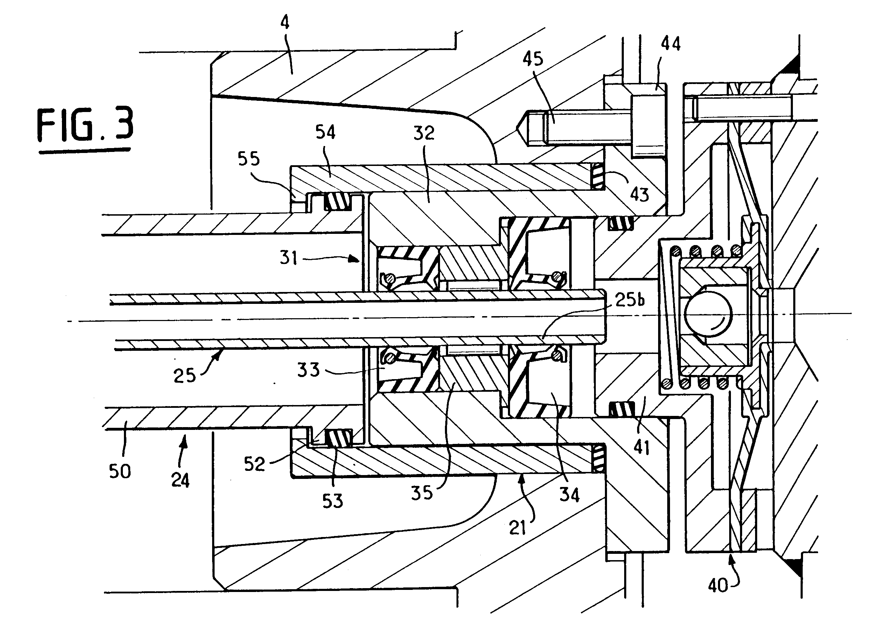

Les **fig. 2** et **3** montrent que, selon l'invention, il est prévu de lier rigidement le moyeu **4** et le pignon **8** qui est monté de façon tournante sur le carter **7** par l'intermédiaire d'au moins un roulement **20**. Le moyeu **4** présente un alésage central axial **21** coïncidant avec un dégagement **22** ménagé dans le pignon **8** pour aboutir à une portée cylindrique **23** coaxiale à l'alésage **21**. La portée **23**, le dégagement **22** et l'alésage **21** constituent un logement pour la mise en place d'un dispositif de transfert **24**. Selon l'invention, le dispositif **24** comprend un tube **25** dont la partie terminale **25a**, dite intérieure en considération de la face extérieure du moyeu **4**, est rendue solidaire d'un raccord **26**. La solidarisation peut découler d'une réalisation monobloc ou, encore, d'une adaptation du tube **25** sur le raccord **26** proprement dit. Dans un tel cas, des moyens d'étanchéité certaine sont mis en oeuvre pour éviter toute fuite entre le raccord **26** et le tube **25**.

Le raccord **26** comporte, au-delà d'un épaulement de butée **27**, un embout fileté décolleté **28** tubulaire communiquant en permanence avec le tube **25**. L'embout **28** est monté, avec interposition d'un joint **29**, dans un puits **30** présenté par la partie fixe **7** et communiquant avec la source **11**, par exemple par une ligne **14**.

Selon l'invention, le tube **25** est engagé, par sa partie terminale extérieure **25b**, à travers un joint tournant **31** centré dans l'alésage **21**. Dans une disposition constructive préférée, le joint tournant est porté par une bague **32** amovible qui peut être centrée dans l'alésage **21** en étant adaptée de façon démontable à partir de la face extérieure du moyeu **4**. La bague porte-joint **32** est, de préférence, constituée pour permettre l'adaptation d'un joint tournant **31** comprenant deux garnitures d'étanchéité **33** et **34**, du type à lèvres, qui sont montées en opposition l'une de l'autre par rapport à un palier central **35** présenté par la bague **32**. Le palier **35** peut être formé directement par la bague **32** ou être constitué par une bague lisse, autolubrifiante, rapportée ou, encore, par un roulement. Dans tous les cas, le palier **35** représente une portée de centrage à travers laquelle la partie terminale **25b** du tube **25** est automatiquement centrée et maintenue à proximité immédiate des garnitures **33** et **34**.

La partie terminale **25b** traverse le joint **31** au-delà duquel elle débouche dans la bague **32** pour communiquer, soit directement avec le circuit **13** menant à la valve **12**, soit avec un clapet de gonflage-dégonflage **40**, du type piloté à distance, décrit dans la demande **FR 87-07 772**. Dans un tel cas, le clapet **40** est monté de façon étanche, par un nez **41**, à l'intérieur de la bague **32** et se trouve porté par le moyeu **4** sur lequel il est fixé par l'intermédiaire d'organes démontables, tels que des vis **42**.

Le montage, tel que décrit ci-dessus, se caractérise par la mise en oeuvre d'un raccord démontable entre la partie fixe **7** et la partie terminale intérieure **25a** du tube **25** dont la partie terminale extérieure **25b** coopère avec le joint tournant **31** localisé au droit du moyeu **4**. Une telle disposition a pour effet de rendre directement accessible le joint tournant **31**, même sans démontage de la roue **3**, par simple enlèvement d'un capot protecteur ou, encore, du clapet **40**. Ainsi, une inspection de la bonne qualité du joint tournant **31** peut être menée à bien, dans toutes les circonstances, avec une périodicité rapprochée, en raison de l'accès facile et rapide.

La constitution du joint tournant **31**, incluant le palier **35**, permet de réaliser un centrage forcé du tube **25** dont la flexibilité relative est à même de compenser les défauts d'excentration susceptibles d'exister, en raison des tolérances de fabrication ou de la déformation du tube **25**. Ainsi, la partie terminale **25b** est immobilisée, de façon exactement coaxiale au moyeu tournant **4**, de sorte que les garnitures d'étanchéité **33** et **34** peuvent travailler dans des conditions optimales avec une efficacité certaine dans le temps. Il doit être considéré que, pour faciliter un tel montage par centrage forcé, il peut être prévu de faire comporter au tube **25** une partie flexible, par exemple annelée.

Dans le cas d'application à une installation de contrôle par gonflage-dégonflage, les garnitures **33** et **34** sont du type à lèvres préférentiellement et sont disposées en opposition, comme illustré par la **fig. 2** et par la **fig. 3**, de manière à conférer une étanchéité au dispositif dans les cas de transfert sous pression ou, éventuellement, sous dépression relative. Dans tous les cas, la garniture **33** est nécessaire pour arrêter l'huile de graissage du mécanisme contenue dans le carter **7**.

Par mesure de sécurité, il est avantageux d'interposer, entre la bague **32** et le moyeu **4**, un joint d'étanchéité **43** qui est, par exemple, disposé pour coopérer avec une collerette **44** de la bague **32** dont l'immobilisation axiale et angulaire peut être assurée par tout moyen convenable, notamment par des vis **45**.

Le montage du tube de transfert **25** sur la partie fixe **7** peut être exécuté à distance, soit à partir du tube **25**, soit à partir d'une liaison d'assemblage, telle que **46**, présentée par le raccord **26** sous la forme d'un ou plusieurs méplats ou, encore, d'une section polygonale d'assemblage avec une clé à douille tubulaire.

Il est indispensable d'interdire toute sortie d'huile du mécanisme, en particulier vers un disque de frein **4a** interposé entre le moyeu **4** et le pignon **8**, en prévoyant d'entourer le tube **25** dans la partie de l'évidement **22**, par une enveloppe ou une trompette **50**, de préférence de forme cylindrique, entourant à distance le tube **25**. L'enveloppe **50** est, par exemple, montée, par un joint d'étanchéité **51**, dans la portée **23** du pignon denté **8**, alors qu'elle coopère de semblable façon avec le moyeu **4**. L'enveloppe **50** permet le passage d'une clé de manoeuvre de l'embout **26**.

Selon une forme de réalisation préférée, l'enveloppe **50** comporte, à sa partie terminale extérieure, une collerette **52** pourvue d'un joint **53** et coopérant avec un prolongement cylindrique tubulaire **54** du moyeu **4**. Un tel prolongement peut être formé directement par le moyeu ou, encore, par un fourreau rapporté et collé dans l'alésage **21**.

Le prolongement **54** forme, à sa partie intérieure, un rebord **55** constituant un épaulement d'immobilisation de la collerette **52** maintenue, par ailleurs, par la face transversale correspondante de la bague porte-joint **32**.

L'invention n'est pas limitée à l'exemple décrit et représenté, car diverses modifications peuvent y être apportées sans sortir de son cadre.

## Revendications

1. Dispositif de transfert de fluide sous pression relative dans une installation de régulation de la pression de gonflage d'un pneumatique de véhicule roulant, du type à essieu-portique, comprenant une partie fixe (**7**) liée à l'essieu, un pignon denté (**8**) d'entraînement monté tournant sur ou dans la partie fixe, un moyeu de roue (**4**) fixé coaxialement sur le pignon tournant et une canalisation de transfert (**24**) traversant suivant l'axe du pignon tournant, d'une part, le moyeu au delà duquel elle est raccordée au pneumatique et, d'autre part, le pignon tournant pour communiquer avec une source de fluide montée sur la partie fixe,
caractérisé en ce que la canalisation de transfert (**24**) comprend un tube (**25**) solidaire, par sa partie terminale dite intérieure (**25a**), d'un raccord (**26**) monté, de façon amovible et étanche, sur la partie fixe (**7**) pour communiquer avec la source de fluide (**11**) et engagé, par sa partie terminale dite extérieure (**25b**), à travers un joint tournant (**31**) porté par le moyeu (**4**) et au delà duquel le tube débouche pour communiquer avec un circuit (**13**) menant au pneumatique.

2. Dispositif selon la revendication 1, caractérisé en ce que le joint tournant (**31**) est monté dans une bague porte-joint (**32**) occupant un alésage central (**21**) du moyeu (**4**).

3. Dispositif selon la revendication 1 ou 2, caractérisé en ce que le joint tournant (**31**) comprend deux garnitures d'étanchéité (**33**, **34**), à lèvres déformables, montées en opposition de part et d'autre d'un palier (**35**) présenté par la bague porte-joint (**32**) et assurant le centrage de la partie (**25b**) du tube (**25**).

4. Dispositif selon la revendication 3, caractérisé en ce que le palier (**35**) est constitué par une pièce rapportée dans la bague porte-joint.

5. Dispositif selon la revendication 1, caractérisé en ce que le tube (**25**) est entouré à distance par une enveloppe cylindrique (**50**), concentrique, montée de façon étanche dans le pignon (**8**) et sur le joint tournant (**31**).

6. Dispositif selon la revendication 1 ou 5, caractérisé en ce que l'enveloppe (**50**) est engagée, par une collerette (**52**) de son extrémité avant, à l'intérieur d'un prolongement tubulaire (**54**) du moyeu, entre un rebord extrême (**55**) de ce prolongement et la face transversale correspondante de la bague porte-joint (**32**).

7. Dispositif selon la revendication 1 ou 5, caractérisé en ce que le tube (**25**) comprend une partie flexible.

8. Dispositif selon la revendication 1, caractérisé en ce que le raccord (**26**) est rendu solidaire de la partie terminale (**25a**), dite interne, du tube (**25**) et comporte un embout tubulaire (**28**) fileté, communiquant avec le tube et monté dans un puits taraudé (**30**) ménagé dans la partie fixe (**7**) et communiquant avec la source (**11**).

## Claims

1. Transfer device for a fluid under relative pressure in an installation for regulating the inflating pressure of a vehicle tyre, of the carrier-axle type, comprising a fixed part (7) joined to the axle, a helical driving gear (8) mounted for rotating on or in the fixed part, a wheel hub (4) fixed coaxially on the rotary gear and a tranfer channel (24) traversing along the axis of the rotary gear, on the one hand, the hub beyond which it is connected to the tyre and, on the other hand, the rotary gear in order to communicate with a source of fluid mounted on the fixed part,
characterized in that the transfer channel (24) comprises a tube (25) which is fast, in its end portion called inner portion (25a) with a connector (26) mounted, in removable and tight manner, on the fixed part (7) so as to communicate with the fluid source (11) and engaged, by its end portion called outer portion (25b), through a revolving joint (31) carried by the hub (4) and beyond which the tube opens out to communicate with a circuit (13) leading to the tyre.

2. Device according to claim 1, characterized in that the revolving joint (31) is mounted in a joint-support ring (32) contained in a central bore (21) of the hub (4).

3. Device according to claim 1 or 2, characterized in that the revolving joint (31) comprises two packings (33, 34), with deformable lips, mounted in opposite manner on either side of a bearing (35) provided on the joint-support ring 532) and ensuring the centering of the part (25b) of the tube (25).

4. Device according to claim 3, characterized in that the bearing (35) is constituted by a piece fixed in the joint-support ring.

5. Device according to claim 1, characterized in that the tube (25) is surrounded at a distance by a cylindrical envelope (50) which is concentric and mounted in tight manner in the gear (8) and on the revolving joint (31).

6. Device according to claim 1 or 5, characterized in that the envelope (50) is engaged, via a flange (52) of its front end, inside a tubular extension (54) of the hub, between an outermost edge (55) of said extension and the corresponding transversal face of the joint-support ring (32).

7. Device according to claim 1 or 5, characterized in that the tube (25) comprises a flexible part.

8. Device according to claim 1, characterized in that the connector (26) is made fast with the end portion (25a), called inner portion, of the tube (25) and comprises a threaded tubular endpiece (28), which communicates with the tube and is mounted in a threaded well (30) provided in the fixed part (7) and communicating with the source (11).

## Patentansprüche

1. Vorrichtung zum Übertragen von unter Relativdruck stehenden Fluid in eine Einrichtung zum Steuern des Aufpumpdrucks einer pneumatischen Luftbereifung eines eine tragende Achse aufweisenden und sich bewegenden Fahrzeugs, mit einem festen Teil (7), das an der Achse angeordnet ist, einem Zähne aufweisenden Antriebsritzel (8), welches drehbar auf oder in dem festen Teil angeordnet ist, einer Radnabe (4), die koaxial auf dem sich drehenden Ritzel festgelegt ist und einer Übertragungskanalanordnung (24), die der Achse des sich drehenden Ritzels nachfolgt und einerseits mit der Nabe in Verbindung steht, über das es mit der Luftbereifung verbunden ist und andererseits mit dem sich drehenden Ritzel, zum in Verbindung kommen mit einer Fluidquelle, welche auf dem festen Teil montiert ist,
**dadurch gekennzeichnet**, daß
die Übertragungskanalanordnung (24) ein festes Rohr (25) mit einem als Inneres bezeichneten Endstück (25a) enthält, weiterhin ein Verbindungsstück, das unbeweglich und dicht auf dem festen Teil (7) montiert ist, zum in Verbindung bringen mit der Fluidquelle (11) und zum quer in Eingriff bringen, mit seinem als Äußeres bezeichnetes Endstück (25b), mit einer Drehverbindung (31), die durch die Nabe (4) getragen wird, wobei in dieselbe das Rohr für eine Verbindung mit einer Schaltung (13), die in die Luftbereifung führt, verläuft.

2. Vorrichtung nach Anspruch 1,
dadurch gekennzeichnet, daß
die Drehverbindung (31) in einem Flansch (32) montiert ist, welcher eine Zentralbohrung (21) der Nabe (4) einnimmt.

3. Vorrichtung nach Anspruch 1 oder 2,
dadurch gekennzeichnet, daß
die Drehverbindung (31) zwei verformbare Lippen enthaltende Dichtungseinheiten (33, 34) enthält, welche gegenüberliegend zueinander und beiderseits eines Lagers (35) gegenüber dem Flansch (32) montiert sind und das Zentrieren des Teils (25b) des Rohrs (25) sichert.

4. Vorrichtung nach Anspruch 3,
dadurch gekennzeichnet, daß
das Lager (35) aus einem Teil besteht, welches in den Flansch eingebracht ist.

5. Vorrichtung nach Anspruch 1,
dadurch gekennzeichnet, daß
das Rohr (25) mit einem Abstand durch eine zylindrische Hülle (50) konzentrisch umgeben ist, die dicht in dem Ritzel (8) und auf der Drehverbindung (31) montiert ist.

6. Vorrichtung nach Anspruch 1 oder 5,
dadurch gekennzeichnet, daß
die Hülle (50) über einen Bund (52) an ihrem vorderen Ende mit dem Inneren einer röhrenförmigen Verlängerung (54) mit der Nabe in Eingriff steht, zwischen einem Aussenderand (55) der Verlängerung und der Verbindungsfläche des entsprechenden Flansches (32).

7. Vorrichtung nach Anspruch 1 oder 5,
dadurch gekennzeichnet, daß
das Rohr (25) ein flexibles Teil enthält.

8. Vorrichtung nach Anspruch 1,
dadurch gekennzeichnet, daß
das Verbindungsstück (26) fest mit dem als Inneres bezeichneten Abschlußstück (25a) mit dem Rohr (25) verbunden ist und einen röhrenförmigen Aufsatz (28) bildet, mit Außengewinde, der mit dem Rohr in Verbindung steht und in einer ein Gewinde aufweisende Aufnahme (30) montiert ist, die in dem festen Teil (7) angeordnet ist und mit der Quelle (11) in Verbindung steht.
